# EUROPÄISCHE PATENTSCHRIFT

(11) **EP 0 688 411 B1**
(45) Veröffentlichungstag und Bekanntmachung des Hinweises auf die Patenterteilung: **29.12.1997**
(21) Anmeldenummer: 94906887.8
(22) Anmeldetag: 19.02.1994
(51) Int. Cl.: F16K 11/07

(54) **HYDRAULISCHES STEUERVENTIL**
HYDRAULIC CONTROL VALVE
SOUPAPE DE COMMANDE HYDRAULIQUE

(30) Priorität: 13.03.1993 DE 4307990
(43) Veröffentlichungstag der Anmeldung: 27.12.1995
(73) Patentinhaber: ROBERT BOSCH GMBH, 70442 Stuttgart (DE)
(72) Erfinder: PFUHL, Berthold, D-71706 Markgroeningen (DE); ZEHNER, Friedhelm, D-71643 Ludwigsburg (DE); ZUMBRAEGEL, Joachim, D-71735 Eberdingen (DE)
(86) Internationale Anmeldenummer: DE9400183
(87) Internationale Veröffentlichungsnummer: WO9421947

(56) Entgegenhaltungen:
- US-A- 3 370 613
- US-A- 3 735 780
- US-A- 3 902 526
- US-A- 5 092 365

## Beschreibung

### Stand der Technik

Die Erfindung geht aus von einem hydraulischen Steuerventil nach der Gattung des Hauptanspruchs.

Bei direkt betätigten Hydraulikventilen wird deren Einsatzgrenze im wesentlichen durch das Verhältnis von Strömungskräften zu Betätigungskräften bestimmt. Läßt sich die Strömungskraft reduzieren, so kann die Einsatzgrenze angehoben oder die Betätigungskraft verkleinert werden. Zu Ursache, Betrag und Wirkrichtung solcher Strömungskräfte an Steuerkanten von Hydraulikventilen wird auf die einschlägige Literatur verwiesen, wie dies zum Beispiel aus dem Fachbuch von J.F. Blackburn, G. Reethof, J.L. Shaerer: Fluid Power Control I, II, III, Krausskopfverlag, Mainz 1962 entnommen werden kann. Es sind auch schon verschiedene Möglichkeiten zur Reduzierung solcher Strömungskräfte beschrieben, wobei jedoch in der Regel solche bekannte Verfahren nur für ein- oder ausströmende Steuerkanten anwendbar sind, dabei einen hohen statischen Druckverlust verursachen und meist einen hohen Aufwand an Kosten erfordern. Hinzu kommt noch der Umstand, daß eine Strömungskraftkompensation an einer Ausström-Steuerkante ungleich schwieriger durchzuführen ist, als an einer Einström-Steuerkante.

Aus den Niederschriften zum 9. Aachener Fluidtechnischen Kolloquium 1990 ist in dem Beitrag "Strömungskraftkompensation in Hydraulik-Schieberventilen" von H.J. Feigel, Seiten 79 bis 97 ein gattungsbildendes hydraulisches Steuerventil mit einer Einrichtung zur Strömungskraftkompensation an einer Ausström-Steuerkante bekannt. Dabei ist das Steuerventil als elektromagnetisch betätigbares 4-Wege-Regelventil mit vier Steuerkantenpaaren ausgebildet, wobei jede Auslaß-Steuerkante eine Einrichtung zur Strömungskraft-Kompensation aufweist, bei der eine den Steuerschieber aufnehmende Schieberhülse im Bereich einer Auslaß-Steuerkante eine in der Hülse angeordnete Umlenk-Ringnut aufweist. Um hier eine aufwendige Innenbearbeitung zu vermeiden, ist die Schieberhülse so ausgebildet, daß eine mittlere Hülse an ihren beiden äußeren Enden jeweils mit einer zusätzlichen Aufsatzhülse versehen ist. Auf diese Weise läßt sich die Ausström-Steuerkante an der Hülse über eine Stirnflächenbearbeitung relativ einfach und maßgenau herstellen. Zudem wird die Umlenk-Ringnut durch die im Durchmesser größere, aufgesteckte Aufsatzhülse hergestellt. Von Nachteil bei dieser Lösung ist nun, daß hier zur Vermeidung der Innenbearbeitung der Ausström-Steuerkante ein hoher Aufwand getrieben werden muß, um eine Strömungskraftkompensation zu erreichen. So arbeitet dieses Ventil mit einer dreiteiligen Schieberhülse, die mit verschiedenen Außendurchmessern im Gehäuse angeordnet ist. Dies erfordert eine genaue Gehäusebearbeitung, um bei der mehrteiligen Schieberhülsen-Bauart ein Schieberklemmen zu vermeiden. Zudem sind an der mittleren Hülse von der Ausström-Steuerkante aus sich axial erstreckende Zapfen angeordnet, so daß eine einfache Herstellung der Ausström-Steuerkante durch zum Beispiel Drehen nicht möglich ist. Auch lassen sich bei dieser Ausbildung beliebige Durchfluß-Geometrieen an den Steuerkanten schlecht realisieren. Weiterhin erfordert die mehrgliedrige Hülsenbauart einen erhöhten Aufwand für Abdichtung. Auch Herstellung und Montage des Regelventils gestalten sich schwieriger.

Ferner ist aus der EP 0 030 336 B1 ein Druckreduzierventil bekannt, das nach Art eines Einbauventils ausgebildet ist und eine Strömungskraftkompensation aufweist. Die Einrichtung zur Strömungskraftkompensation ist hier für eine Einlaß-Steuerkante ausgebildet, wobei der in einer Hülse angeordnete Steuerschieber in einem vom Druckmittel durchströmten Kanalbereich einen Kolbenbund mit Kegelfasen aufweist, der kompensierende Impulskräfte erzeugt. Eine Kompensation von Strömungskräften an einer Ausström-Steuerkante ist hier nicht vorgesehen.

### Vorteile der Erfindung

Das erfindungsgemäße hydraulische Steuerventil mit den kennzeichnenden Merkmalen des Hauptanspruchs hat demgegenüber den Vorteil, daß es unter Beibehaltung der günstigen Strömungskraftkompensation an der Auslaß-Steuerkante auf eine Innenbearbeitung dieser Steuerkante verzichtet und zudem weniger aufwendig und einfacher baut. So kann für die Kompensation der Strömungskräfte an der Ausström-Steuerkante ein Verfahren beibehalten werden, das im Vergleich zu anderen Kompensationsverfahren mit geringen Druckverlusten arbeitet. Vor allem läßt sich die Schieberhülse ohne Innenbearbeitung der Steuerkanten einstückig ausbilden, so daß keine zusätzlichen Teile notwendig sind. Dies erlaubt eine kostengünstige Bearbeitung der Teile. Ferner ermöglicht die einteilige Hülse eine stabilere Bauweise und eine günstigere Anordnung der Hülse im Gehäuse. Die Steueröffnungen selbst lassen sich durch Elektroerodieren relativ kostengünstig und maßgenau herstellen. Fernerhin erlaubt die gesonderte Ausbildung von Steueröffnungen einerseits und Auslaßöffnungen andererseits mehr Möglichkeiten bei der optimalen Auslegung der Strömungskraftkompensation im Bereich der Ausström-Steuerkante. Für die äußere Abdeckung der Steueröffnungen in der Schieberhülse braucht kein besonderer Aufwand betrieben zu werden, da diese Funktion vom ohnedies vorhandenen Gehäuse übernommen wird. Der in der Umlenk-Ringnut der Schieberhülse erzeugte Impuls kann daher ohne weiteres auf den Steuerschieber zurückgeführt werden.

Durch die in den Unteransprüchen aufgeführten Maßnahmen sind vorteilhafte Weiterbildungen und Verbesserungen des im Hauptanspruch angegebenen Wegeventils möglich. So lassen sich bei einer Ausbildung nach Anspruch 2 auf einfache Weise große Steuerquerschnitte auf engem Raum unterbringen. Günstig ist ferner eine Ausbildung nach Anspruch 3, wodurch sich unterschiedliche Durchflußgeometrien an den Ausström-Steuerkanten realisieren lassen, wodurch das Regelventil an unterschiedliche Einsatzfälle besser anpaßbar ist. Zweckmäßig ist es ferner, wenn die Hülse gemäß Anspruch 5 ausgebildet wird, so daß sie neben einfacher Bauweise eine hohe Stabilität aufweist. Um eine optimale Kompensation der Strömungskräfte mit einer kompakten Bauweise des Ventils zu vereinen, ist es vorteilhaft, wenn es gemäß den Ansprüchen 6 und 7 ausgebildet wird. Besonders vorteilhaft ist es, wenn diese Bauweise gemäß Anspruch 8 bei einem 4-Wege-Regelventil angewandt wird. Weiterhin ist es zweckmäßig, wenn die erfindungsgemäße Strömungskraftkompensation mit Einrichtungen zur Strömungskraftkompensation an den Einström-Steuerkanten kombiniert wird, wozu sie sich besonders eignet und wodurch die Einsatzgrenze bei direkt gesteuerten Regelventilen weiter angehoben werden kann. Außerdem läßt sich die Einrichtung zur Strömungskraftkompensation gemäß Anspruch 11 auch vorteilhaft bei Hydraulikventilen anwenden, die nach Art eines Einbau- bzw. Cartridge-Ventils ausgebildet sind. Weitere vorteilhafte Ausgestaltungen ergeben sich aus den übrigen Ansprüchen, der Beschreibung und der Zeichnung.

### Zeichnung

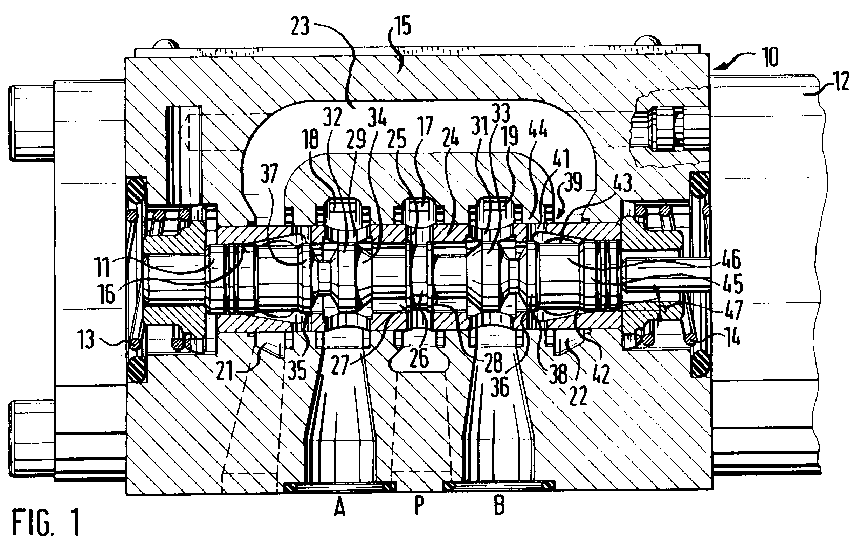

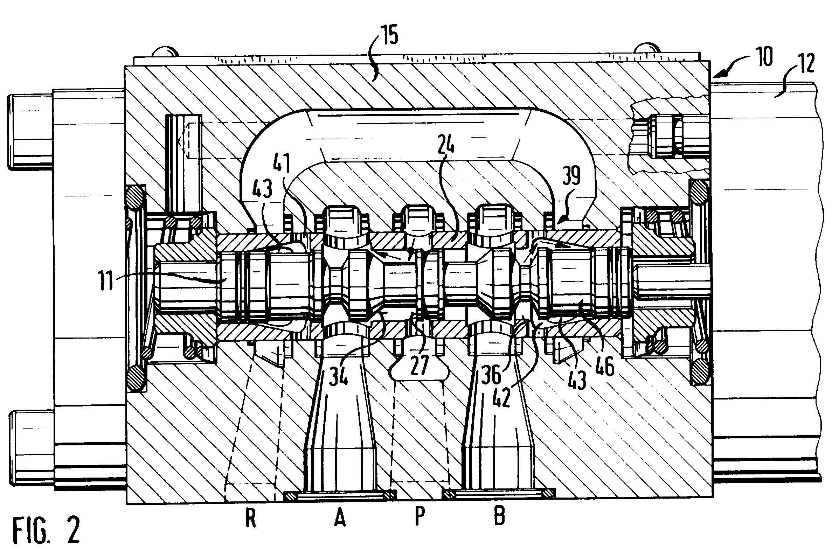

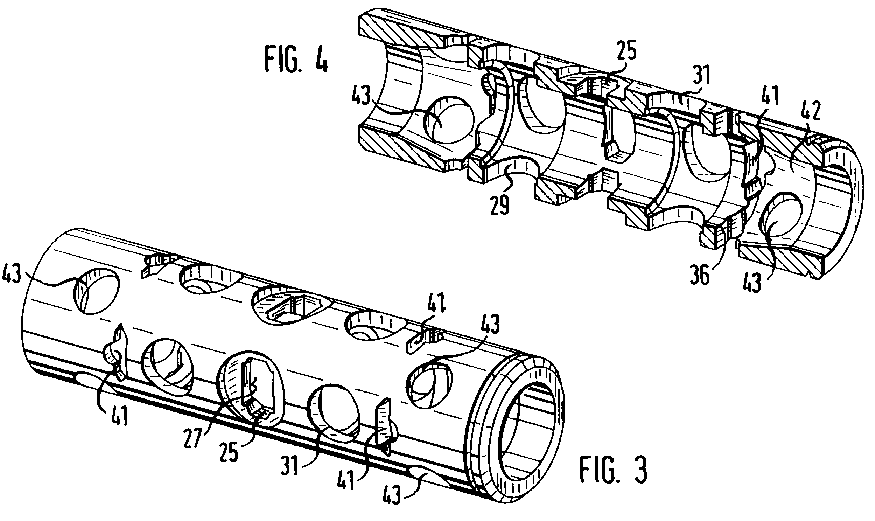

Ein Ausführungsbeispiel der Erfindung ist in der Zeichnung dargestellt und in der nachfolgenden Beschreibung näher erläutert. Es zeigen Figur 1 einen Längsschnitt durch ein hydraulisches Steuerventil mit einer Einrichtung zur Strömungskraftkompensation an einer Ausström-Steuerkante, Figur 2 einen Längsschnitt durch das Steuerventil nach Figur 1 mit einem in Arbeitsstellung befindlichen Steuerschieber, Figur 3 eine perspektivische Darstellung der Schieberhülse des Steuerventils nach Figur 1 und Figur 4 einen Längsschnitt durch die Schieberhülse nach Figur 3.

### Beschreibung des Ausführungsbeispiels

In Figur 1 ist in vereinfachter Darstellung als hydraulisches Steuerventil ein einstufiges, stetig arbeitendes Regelventil 10 dargestellt, dessen Steuerschieber 11 von einem Regelmagneten 12 gegen die Kraft von Rückstellfedern 13, 14 betätigbar ist. Das elektromagnetische Regelventil 10 ist in einer an sich bekannten 5-Kammer-Bauweise ausgebildet, wozu sein Gehäuse 15 eine durchgehende Längsbohrung 16 aufweist, die neben einer mittig liegenden Zulaufkammer 17 zwei danebenliegende Motorkammern 18, 19 sowie zwei nach außen hin anschließende Rücklaufkammern 21 bzw. 22 durchdringt. Die Zulaufkammer 17 ist in üblicher Weise mit einem P-Anschluß verbunden, die Motorkammern 18, 19 mit den Verbraucheranschlüssen A bzw. B, während die beiden Rücklaufkammern 21 und 22 über einen Querkanal 23 miteinander und mit einem Tankanschluß R Verbindung haben.

In die Längsbohrung 16 ist eine Schieberhülse 24 eingesetzt, in welcher der Steuerschieber 11 dicht und gleitend geführt ist. Für das in einer Technik mit vier Steuerkantenpaaren ausgebildete Regelventil 10 sind in der Schieberhülse 24 Aussparungen angeordnet, über welche Druckmittel zwischen den einzelnen Kammern 17 bis 22 in das Innere der Schieberhülse 24 und umgekehrt strömen kann. Zu diesem Zweck weist die Schieberhülse 24 im Bereich der Zulaufkammer 17 Einlaßöffnungen 25 auf, die von einem ersten, mittleren Kolbenbund 26 am Steuerschieber 11 übersteuerbar sind. An diesen Einlaßöffnungen 25 sind eine erste Einström-Steuerkante 27 sowie eine zweite Einström-Steuerkante 28 ausgebildet, wobei jedes dieser Steuerkantenpaare aus einer gehäusefesten Steuerkante an der Schieberhülse 24 sowie einer zugeordneten Schieberkante am ersten Kolbenbund 26 besteht. Die erste Einström-Steuerkante 27 ist dabei der Verbindung von P nach A zugeordnet, während die zweite Einström-Steuerkante 28 die Verbindung P nach B steuert.

Im Bereich der ersten Motorkammer 18 weist die Schieberhülse 24 Durchgangsbohrungen 29 auf, während in entsprechender Weise in der zweiten Motorkammer 19 die Schieberhülse 24 gleichartige Durchgangsbohrungen 31 aufweist. Bei dem in Figur 1 in Mittelstellung dargestellten Steuerschieber 11 liegen im Bereich der Durchgangsbohrungen 29, 31 jeweils am Steuerschieber 11 ausgebildete Kolbenbunde 32 bzw. 33 die auf ihren jeweils den Einström-Steuerkanten 27, 28 zugewandten Seiten eine Kegelfase 34 aufweisen. Diese Kolbenbunde 32, 33 haben keine Steuerfunktion, sondern dienen lediglich zur Kompensation von Strömungskräften, worauf später noch näher eingegangen wird.

In den Bereichen der Schieberhülse 24 zwischen den beiden Motorkammern 18, 19 und den angrenzenden Rücklaufkammern 21 bzw. 22 liegen das dritte bzw. vierte Steuerkantenpaar, die eine erste Ausström-Steuerkante 35 bzw. eine zweite Ausström-Steuerkante 36 bilden. Auch diese Ausström-Steuerkanten 35, 36 bestehen jeweils aus einer gehäusefesten Steuerkante an der Schieberhülse 24 und einer zugeordneten Steuerkante an einem vierten 37 bzw. fünften Kolbenbund 38 des Steuerschiebers 11. Den Ausström-Steuerkanten 35, 36 ist jeweils eine Einrichtung zur Kompensation der Strömungskräfte an diesen Steuerkanten zugeordnet, die untereinander gleich bauen und weshalb im folgenden diese Einrichtung 39 lediglich an der zweiten Ausström-Steuerkante 36 näher erläutert werden soll.

Wie nach Figur 1 in Verbindung mit Figur 3, welche die Schieberhülse 24 in perspektivischer Darstellung zeigt, und in Verbindung mit Figur 4, welche einen Längsschnitt durch diese Schieberhülse zeigt, besser erkennbar ist, sind in dieser Einrichtung 39 zur Strömungskraftkompensation die Ausström-Steuerkante 36 an vier Steueröffnungen 41 ausgebildet, die längs des Umfangs der Schieberhülse 24 gleichmäßig verteilt angeordnet sind. Jede dieser Steueröffnungen 41 hat eine im wesentlichen trapezförmige Form mit gleich langen Schenkeln, von deren parallelen Seiten die kürzere Seite jeweils die eigentliche Ausström-Steuerkante bildet. Sämtliche Steueröffnungen 41 sind als radial durchgehende Öffnungen in der Schieberhülse 24 ausgebildet, so daß sie mit einem elektrischen Draht-Erosionsverfahren relativ einfach und maßgenau hergestellt werden können. Für die Herstellung der Ausström-Steuerkanten 35, 36 ist somit keine Innenbearbeitung der Schieberhülse 24 erforderlich. Wie die Figur 1 deutlicher zeigt, ragen diese Steueröffnungen 41 im Inneren der Schieberhülse 24 in eine ringförmige Umlenk-Ringnut 42, deren axiale Länge ein Mehrfaches der axialen Erstreckung der Steueröffnungen 41 beträgt. In einem Bereich innerhalb dieser Umlenk-Ringnut 42 weist nun die Schieberhülse 24 vier radial nach außen zeigende Auslaßöffnungen 43 auf, welche das Innere der Schieberhülse 24 mit der zugeordneten zweiten Rücklaufkammer 22 verbinden. Diese gleichmäßig längs des Umfangs verteilten Auslaßöffnungen 43 liegen in axialer Richtung der Schieberhülse 24 gesehen im Abstand von den Steueröffnungen 41 und sind zudem relativ zu letzteren in Drehrichtung versetzt angeordnet. Steueröffnungen 41 und Auslaßöffnungen 43 sind so aufeinander abgestimmt, daß die Schieberhülse 24 in diesem Bereich durchgehende Materialstege aufweist und somit ausreichende Stabilität besitzt. Während die Auslaßöffnungen 43 mit der zweiten Rücklaufkammer 22 korrespondieren, sind die in der Schieberhülse 24 weiter innen liegenden Steueröffnungen 41 durch einen Gehäusesteg 44 außen verschlossen. Ferner weist der Steuerschieber 11 im Bereich dieser Einrichtung 39 zur Kraftkompensation eine zwischen dem fünften Kolbenbund 38 und einem Außenbund 45 liegende ringförmige Außennut 46 auf, die sich in der gezeichneten Mittelstellung des Steuerschiebers 11 innerhalb der Umlenk-Ringnut 42 erstreckt.

Für eine optimale Auslegung der Einrichtung 39 zur Reduzierung der Strömungskräfte an der Ausström-Steuerkante 36 sind mehrere Parameter vorhanden, die aufeinander abgestimmt werden können. Dazu gehören vor allem der Außendurchmesser der Außennut 46 am Steuerschieber 11 sowie deren axiale Länge, ferner der maximale Durchmesser der Umlenk-Ringnut 42 sowie deren Kegelwinkel 47. Ferner läßt sich auch der Durchmesser der Auslaßöffnungen 43 variieren.

Zur Erläuterung der Wirkungsweise des hydraulischen Regelventils 10 mit einer Einrichtung 39 zur Strömungskraftkompensation an einer Ausström-Steuerkante 36 wird auf die Figur 2 Bezug genommen, in welcher der Steuerschieber 11 - bezogen auf Figur 2 - nach rechts in eine Arbeitsstellung ausgelenkt ist. Die grundsätzliche Funktion dieser Strömungskraftkompensation wird als an sich bekannt vorausgesetzt, zum Beispiel aus der erwähnten Literatur nach Feigel, wo insbesondere im Bild 11 und 13 sowie dem zugehörigen Text diese Kompensationsverfahren näher beschrieben sind, so daß im folgenden nur soweit darauf eingegangen wird, als zum Verständnis der Erfindung erforderlich ist.

Bei der in Figur 2 dargestellten Stellung des Steuerschiebers 11 fließt Druckmittel vom B-Anschluß über die Durchgangsbohrungen 31 in der Schieberhülse 24 in deren Inneres hinein, durchströmt die Ausström-Steuerkante 36, wird in der Umlenk-Ringnut 42 zumindest teilweise umgelenkt, bevor das Druckmittel über die Auslaßöffnungen 43 in die zweite Rücklaufkammer 22 und weiter zum R-Anschluß gelangt. Dieser Durchflußweg ist teilweise durch Strömungspfeile in der Einrichtung 39 angezeigt. Dabei bewirkt das aus dem Innenraum der Schieberhülse 24 vorbei an der zweiten Ausström-Steuerkante 36 nach außen fließende Druckmittel einen Impuls auf den Steuerschieber 11, der ihn in Richtung Schließbewegung belastet. Nach der zweiten Ausström-Steuerkante 36 kann nun das Druckmittel nicht direkt aus der Schieberhülse 24 in das Gehäuse 15 eintreten, sondern wird in der Schieberhülse 24 durch die Umlenk-Ringnut 42 umgelenkt und auf den Steuerschieber 11 zurückgeführt. Nur ein kleiner Teil des Druckmittelstroms kann ohne nennenswerte Umlenkung durch die Auslaßöffnungen 43 hindurch unmittelbar in die zweite Rücklaufkammer 22 strömen. Der auf den Steuerschieber 11 jedoch zurückgeführte Teil des Druckmittelstroms verursacht einen Impuls auf den Steuerschieber 11, welcher die schließende Impulskraft an der Ausström-Steuerkante 36 kompensiert. Wie Figur 2 in Verbindung mit Figur 1 deutlich zeigt, sind dabei die radial durchgehenden Steueröffnungen 41 in der Schieberhülse 24 durch den Gehäusesteg 44 vollständig oder zumindestens im wesentlichen so weit geschlossen, daß diese Umlenkung in der Schieberhülse 24 auch stattfindet. Es läßt sich somit die Einrichtung 39 zur Strömungskraftkompensation an der Ausström-Steuerkante bei einer einstückig bauenden Schieberhülse 24 erreichen, wobei auf eine Innenbearbeitung der Auslaß-Steuerkanten verzichtet werden kann. Zudem ermöglicht diese getrennte Ausbildung von Steueröffnungen 41 und dazu axial versetzten Auslaßöffnungen 43 mehr Möglichkeiten bei der Optimierung der Einrichtung 39 zur Strömungskraftkompensation.

Wie aus Figur 2 ferner hervorgeht, läßt sich beim Regelventil 10 auch eine Einrichtung zur Strömungskraftkompensation an der Einström-Steuerkante 27 ausbilden. Über diese Einström-Steuerkante 27 wird Druckmittel von der Zulaufkammer 17 durch das Innere der Schieberhülse 24 hindurch zur ersten Motorkammer 18 gesteuert, wobei diese Strömungsrichtung durch zwei Strömungspfeile vereinfacht dargestellt wird. In an sich bekannter Weise übt dabei das an der Einström-Steuerkante 27 in den Steuerschieber 11 hineinfließende Druckmittel eine schließende Impulskraft auf den Steuerschieber 11 aus. Gleichzeitig wird durch die Umlenkung der Strömung mit Hilfe der Kegelfase 34 am Kolbenbund 32 eine entgegengerichtete Impulskraft erzeugt und somit eine Strömungskraftkompensation an der Einström-Steuerkante 27 vorgenommen.

Durch die symmetrische Ausbildung von Steuerschieber 11 und Schieberhülse 24 ist diese Kompensation der Strömungskräfte sowohl an der Ausström- wie auch an der Einström-Steuerkante durchführbar, wenn der Steuerschieber 11 in eine zur Figur 2 entgegengesetzte Arbeitsstellung ausgelenkt wird.

Selbstverständlich sind an der gezeigten Ausführungsform Änderungen möglich, ohne vom Gedanken der Erfindung abzuweichen. Obwohl die Anwendung dieser Strömungskraftkompensation auf ein direkt gesteuertes Vier-Wege-Regelventil besonders vorteilhaft ist, kann es auch bei anderen Regelventilen oder Schaltventilen vorteilhaft angewandt werden. Ebenso ist die Einrichtung auch bei Einbauventilen anwendbar.

## Patentansprüche

1. Hydraulisches Steuerventil mit einer Einrichtung zur Strömungskraftkompensation an einer Ausström-Steuerkante (36), mit einer in einem Ventilgehäuse (15) angeordneten Schieberhülse (24), die in ihrem Inneren einen längsbeweglich geführten Steuerschieber (11) aufnimmt, mit dem zumindest die Verbindung von einer Zulaufseite über die Ausström-Steuerkante (36) zu einer Rücklaufkammer (22) steuerbar ist, wobei die Ausström-Steuerkante von einer gehäusefesten, an der schieberhülse (24) ausgebildeten Steuerkante und einer zugeordneten schieberkante gebildet ist und der über die Ausström-Steuerkante (36) geführte Druckmittelstrom in strömungsrichtung gesehen nach der Steuerkante in einer in der Innenwand der schieberhülse (24) angeordneten Umlenk-Ringnut (42) zumindest teilweise in Richtung auf den steuerschieber (11) zu umgelenkt wird und mit im Bereich dieser Ringnut (42) liegenden, in einer radial zur Hülsenlängsachse verlaufenden Ebene liegenden Auslaßöffnung (43), über welche das Druckmittel aus dem Inneren der Schieberhülse (24) zur Rücklaufkammer (22) abströmen kann, sowie mit einer im Bereich der Auslaßöffnungen (43) liegenden, ringförmigen Außennut (46) am Steuerschieber (11), dadurch gekennzeichnet, daß die Schieberhülse (24) zumindest in dem die gehäusefeste Steuerkante (36) und die Umlenk-Ringnut (42) aufweisenden Bereich einteilig ausgebildet ist und daß diese gehäusefeste, innenliegende Steuerkante (36) von in der schieberhülse (24) angeordneten, radial durchgehenden, zusätzlichen Steueröffnungen (41) gebildet wird, die in axialem Abstand von den Auslaßöffnungen (43) angeordnet sind und daß diese Steueröffnungen (41) in der Außenwand der Schieberhülse (24) zumindest im wesentlichen von dem Ventilgehäuse (15) verschlossen sind.

2. Steuerventil nach Anspruch 1, dadurch gekennzeichnet, daß jeweils mehrere Steueröffnungen (41) und Auslaßöffnungen (43) längs des Umfangs gleichmäßig verteilt in der Schieberhülse (24) angeordnet sind und daß die Steueröffnungen (41) relativ zu den Auslaßöffnungen (43) in Drehrichtung gesehen zueinander versetzt angeordnet sind.

3. Steuerventil nach Anspruch 1 oder 2, dadurch gekennzeichnet, daß die Steueröffnung (41) im wesentlichen die Form eines gleichschenkeligen Trapezes aufweist, dessen kürzere, parallele Seite die Steuerkante (36) bildet.

4. Steuerventil nach einem der Ansprüche 1 bis 3, dadurch gekennzeichnet, daß jeweils vier Steueröffnungen (41) und vier Auslaßöffnungen (43) angeordnet sind, von denen letztere als Bohrungen ausgebildet sind.

5. Steuerventil nach einem oder mehreren der Ansprüche 1 bis 4, dadurch gekennzeichnet, daß die Steueröffnungen (41) und die Auslaßöffnungen (43) in der Schieberhülse (24) so angeordnet sind, daß zwischen ihnen Materialstege verbleiben, die insbesondere bis zur Innenwand der Schieberhülse (24) verlaufen.

6. Steuerventil nach einem oder mehreren der Ansprüche 1 bis 5, dadurch gekennzeichnet, daß sich in axialer Richtung der Schieberhülse (24) gesehen die Auslaßöffnungen (43) innerhalb der Umlenk-Ringnut (42) erstrecken und die Steueröffnungen (41) im wesentlichen innerhalb dieser Umlenk-Ringnut (42) liegen.

7. Steuerventil nach einem oder mehreren der Ansprüche 1 bis 6, dadurch gekennzeichnet, daß die ringförmige Außennut (46) am Steuerschieber (11) in Ausgangsstellung des Steuerschiebers (11) in axialer Richtung gesehen innerhalb der Umlenk-Ringnut (42) der Schieberhülse (24) liegt.

8. Steuerventil nach einem oder mehreren der Ansprüche 1 bis 7, dadurch gekennzeichnet, daß es als stetig arbeitendes 4-Wege-Regelventil mit vier Steuerkantenpaaren und in 5-Kammer-Bauweise ausgebildet ist, bei dem beide Ausström-Steuerkanten (35, 36) jeweils mit einer Einrichtung (39) zur Strömungskraftkompensation versehen sind, die insbesondere an den beiden äußeren Schieberenden (38, 45) liegen.

9. Steuerventil nach Anspruch 8, dadurch gekennzeichnet, daß jeder Einström-Steuerkante (27, 28) eine zusätzliche Einrichtung (32, 34) zur Strömungskraftkompensation zugeordnet ist, die insbesondere jeweils als am Steuerschieber (11) angeordneter Kolbenbund (32, 33) mit Kegelfase (34) ausgebildet ist.

10. Steuerventil nach Anspruch 8 oder 9, dadurch gekennzeichnet, daß es als direkt gesteuertes Regelventil (10) mit einem elektro-magnetischen Antrieb (12) ausgebildet ist.

11. Steuerventil nach den Ansprüchen 1 bis 7, dadurch gekennzeichnet, daß der Steuerschieber und die Schieberhülse Teile eines Einbau- bzw. Cartridge-Ventils sind, das mindestens zwei Wege steuert.

## Claims

1. Hydraulic control valve comprising a device for flow force compensation at an outlet control edge (36), comprising a spool sleeve (24) which is arranged in a valve casing (15) and which in its interior receives a control spool (11) which is guided for longitudinal movement and is able to control at least the connection from an admission side via the outlet control edge (36) to a return chamber (22), the outlet control edge being formed by a control edge, fast with the casing and formed on the spool sleeve (24), and by an associated spool edge and the pressure medium flow guided over the outlet control edge (36) being deflected - downstream of the control edge viewed in the direction of flow - at least partly in the direction of the control spool (11) in a deflecting annular groove (42) fashioned in the inside wall of the spool sleeve (24), and comprising an outlet opening (43) which is situated in the region of said annular groove (42) and in a plane extending radially relative to the longitudinal axis of the sleeve and through which the pressure medium can flow off from the interior of the spool sleeve (24) to the return chamber (22), and further comprising an annular external groove (46), situated in the region of the outlet openings (43), in the control spool (11), characterized in that the spool sleeve (24) has a one-piece configuration at least in the region comprising the control edge (36), fast with the casing, and the deflecting annular groove (42), and in that said internal control edge (36), fast with the casing, is formed by additional radial through control openings (41) which are arranged in the spool sleeve (24) and are arranged at an axial distance from the outlet openings (43), and in that said control openings (41) in the outside wall of the spool sleeve (24) are at least substantially closed by the valve casing (15).

2. Control valve according to Claim 1, characterized in that a plurality of control openings (41) and a plurality of outlet openings (43) are arranged, uniformly distributed along the periphery, in the spool sleeve (24), and in that the control openings (41) are mutually offset, viewed in the direction of rotation, relative to the outlet openings (43).

3. Control valve according to Claim 1 or 2, characterized in that the control opening (41) has substantially the shape of an isosceles trapezoid whose shorter parallel side forms the control edge (36).

4. Control valve according to one of Claims 1 to 3, characterized in that in each case four control openings (41) and four outlet openings (43) are provided, the latter being in the form of bores.

5. Control valve according to one or more of Claims 1 to 4, characterized in that the control openings (41) and the outlet openings (43) in the spool sleeve (24) are so arranged that webs of material, which in particular extend as far as the inner wall of the spool sleeve (24), are left between them.

6. Control valve according to one or more of Claims 1 to 5, characterized in that, viewed in the axial direction of the spool sleeve (24), the outlet openings (43) extend inside the deflecting annular groove (42) and the control openings (41) lie substantially inside said deflecting annular groove (42).

7. Control valve according to one or more of Claims 1 to 6, characterized in that in the starting position of the control spool (11) the annular external groove (46) in the control spool (11), viewed in the axial direction, lies inside the deflecting annular groove (42) in the spool sleeve (24).

8. Control valve according to one or more of Claims 1 to 7, characterized in that it is in the form of a continuous action four-way control valve having four pairs of control edges and a five-chamber construction, in which each of the two outlet control edges (35, 36) is provided with a flow force compensation device (39), these devices being in particular situated at the two outer ends (38, 45) of the spool.

9. Control valve according to Claim 8, characterized in that each inlet control edge (27, 28) has associated with it an additional flow force compensation device (32, 34), each of which is in particular in the form of a piston collar (32, 33) arranged on the control spool (11) and having a conical bevel (34).

10. Control valve according to Claim 8 or 9, characterized in that it is in the form of a directly controlled control valve (10) having an electromagnetic drive (12).

11. Control valve according to Claims 1 to 7, characterized in that the control spool and the spool sleeve are parts of an insertable or cartridge valve which controls at least two ways.

## Revendications

1. Distributeur de commande hydraulique comportant
- une installation de compensation de la force d'écoulement sur l'arête de commande de sortie (36),
- une chemise (24) logée dans le corps de distributeur (15), qui reçoit le tiroir de commande (11) mobile longitudinalement, commandant au moins la liaison entre un côté d'arrivée et une chambre de retour (22), en passant sur l'arête de commande de sortie (36),
- l'arête de commande de sortie (36) est formée par une arête de commande solidaire du corps, réalisée sur la chemise (24), et par une arête de tiroir correspondante, et le flux de fluide sous pression passant sur l'arête de commande de sortie (36) est dévié dans le sens de l'écoulement, en aval de l'arête de commande, dans une rainure annulaire de renvoi (42) réalisée dans la paroi intérieure de la chemise (24), au moins partiellement en direction du tiroir de commande (11) et,
- un orifice de sortie (43) situé dans un plan radial par rapport à l'axe longitudinal de la chemise, au niveau de cette rainure annulaire (42), et le fluide sous pression peut s'échapper de cet orifice de sortie, de l'intérieur de la chemise (24) vers la chambre de retour (22),
- ainsi qu'une rainure extérieure annulaire (46) prévue au niveau des orifices de sortie (43) dans le tiroir de commande (11),
caractérisé en ce que
la chemise (24) est réalisée en une seule pièce, au moins dans la zone qui comporte l'arête de commande (36) solidaire du corps et la rainure annulaire de renvoi (42) et,
- l'arête de commande (36) intérieure, solidaire du corps, est formée par des orifices de commande (41) supplémentaires, réalisés dans la chemise (24) et la traversant radialement, ces orifices de commande étant situés à une distance axiale des orifices de sortie (43) et,
- ces orifices de commande (41) sont fermés au moins essentiellement par le corps (15) du distributeur dans la paroi extérieure de la chemise (24).

2. Distributeur de commande selon la revendication 1,
caractérisé en ce qu'
il comporte chaque fois plusieurs orifices de commande (41) et orifices de sortie (43) répartis régulièrement le long de la périphérie dans la chemise (24) et,
- les orifices de commande (41) sont décalés par rapport aux orifices de sortie (43) dans le sens de rotation.

3. Distributeur de commande selon la revendication 1 ou 2,
caractérisé en ce que
les orifices de commande (41) ont essentiellement la forme d'un trapèze isocèle dont la petite base forme l'arête de commande (36) .

4. Distributeur de commande selon l'une des revendications 1 à 3,
caractérisé par
chaque fois quatre orifices de commande (41) et quatre orifices de sortie (43), ces derniers étant en forme de perçages.

5. Distributeur de commande selon l'une ou plusieurs des revendications 1 à 4,
caractérisé en ce que
les orifices de commande (41) et les orifices de sortie (43) sont réalisés dans la chemise (24) pour laisser subsister des branches de matière qui arrivent notamment jusqu'au niveau de la paroi intérieure de la chemise (24).

6. Distributeur de commande selon l'une ou plusieurs des revendications 1 à 5,
caractérisé en ce que
vus dans la direction axiale de la chemise (24), les orifices de sortie (43) s'étendent à l'intérieur de la rainure annulaire de renvoi (42) et les orifices de commande (41) se situent essentiellement à l'intérieur de cette rainure annulaire de renvoi (42).

7. Distributeur de commande selon l'une ou plusieurs des revendications 1 à 6,
caractérisé en ce que
la rainure extérieure annulaire (46) est prévue dans le tiroir de commande (11), lorsque ce tiroir (11) occupe une position de sortie, dans la direction radiale, à l'intérieur de la rainure annulaire de renvoi (42) de la chemise (24).

8. Distributeur de commande selon l'une ou plusieurs des revendications 1 à 7,
caractérisé en ce qu'
il est réalisé en forme de distributeur de réglage à quatre voies à fonctionnement continu, ayant quatre paires d'arêtes de commande et cinq chambres, les deux arêtes de commande de sortie (35, 36) ayant chaque fois une installation (39) de compensation de la force d'écoulement, située notamment au niveau des deux extrémités extérieures du tiroir (38, 45).

9. Distributeur de commande selon la revendication 8,
caractérisé en ce qu'
à chaque arrête de commande d'entrée (27, 28) est associée une installation supplémentaire (32, 34) pour compenser la force d'écoulement, qui est notamment réalisée chaque fois sur la collerette de piston (32, 33) associée au tiroir de commande (11), avec un congé conique (34).

10. Distributeur de commande selon l'une des revendications 8 ou 9,
caractérisé en ce qu'
il est réalisé sous la forme d'un distributeur de réglage (10) à commande directe par un entraînement électromagnétique (12).

11. Distributeur de commande selon l'une des revendications 1 à 7,
caractérisé en ce que
le tiroir de commande et la chemise font partie d'un distributeur en cartouche ou à intégrer, qui commande au moins deux voies.
